## Europäisches Patentamt
### European Patent Office
### Office européen des brevets

(11) Veröffentlichungsnummer: **0 192 936**
**B1**

(12) # EUROPÄISCHE PATENTSCHRIFT

(45) Veröffentlichungstag der Patentschrift:
04.01.89

(51) Int. Cl.⁴: **F 16 F 9/00,** F 16 F 1/36

(21) Anmeldenummer: **86100409.1**

(22) Anmeldetag: **14.01.86**

(54) **Federkörper.**

(30) Priorität: **27.02.85 DE 3506977**

(43) Veröffentlichungstag der Anmeldung:
**03.09.86 Patentblatt 86/36**

(45) Bekanntmachung des Hinweises auf die Patenterteilung:
**04.01.89 Patentblatt 89/1**

(84) Benannte Vertragsstaaten:
**AT BE CH DE FR GB IT LI NL SE**

(56) Entgegenhaltungen:
**EP-A-0 187 888**
**BE-A-441 260**
**DE-A-2 516 539**
**DE-A-3 017 379**
**DE-C-475 849**
**DE-C-723 596**
**DE-U-8 535 344**
**FR-A-1 348 702**
**FR-A-2 298 737**
**US-A-2 295 363**
**US-A-2 727 738**
**US-A-3 209 380**

**PATENTS ABSTRACTS OF JAPAN, Band 1, Nr. 96,
30. August 1977, Seite 2642 M 77; & JP-A-52 37 675
(SHIGEYA KAWAMATA) 03-23-1977**

(73) Patentinhaber: **WOCO Franz- Josef Wolf & Co.,
Sprudelallee 19, D-6483 Bad Soden- Salmünster
(DE)**

(72) Erfinder: **Wolf, Franz- Josef, Sprudelallee 19,
D-6483 Bad Soden- Salmünster (DE)**
Erfinder: **Pietsch, Hubert, Am Quellenrain 13,
D-6483 Bad Soden- Salmünster (DE)**

(74) Vertreter: **Jaeger, Klaus, Dipl.- Chem. Dr., Jaeger,
Steffens & Köster Patentanwälte Pippinplatz 4a,
D-8035 München- Gauting (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Federkörper aus einem mit Kanälen durchsetzten Block aus einem elastischen Werkstoff.

Im Sinne der vorliegenden Beschreibung ist mit "Block" ein Formstoff oder ein Formkörper prinzipiell beliebiger Konfiguration bezeichnet. So kann der Block beispielsweise die Form eines Kubus, eines Quaders, einer Tonne oder eines Zylinders haben, kann jedoch ebenso gut als Flächenelement, beispielsweise also als Scheibe oder Folie, oder als Band ausgebildet sein.

"Kanäle" im hier gebrauchten Sinne sind rohrartige Bohrungen oder Ausnehmungen im Elastomerblock, die prinzipiell gradlinig, gekrümmt oder gewellt verlaufen können, typischerweise jedoch linear verlaufend ausgebildet sein werden. An den äußeren Oberflächen des Elastomerblocks können die Kanäle beidseitig geschlossen, einseitig offen oder beidseitig offen sein.

Ein Flächenfederkörper dieser Art, nämlich eine Matratze für Liegemöbel, ist aus der deutschen Offenlegungsschrift DE-3 017 379 A1 bekannt. Der flach quaderförmige oder scheibenförmige Federkörper weist große, in Richtung des Vektors der Auflast ausgerichtete zylindrische, in Kugelkappen auslaufende Hohlräume auf, die oberseitig, unterseitig und mittig mit einem Kanalnetz verbunden sind, das jeweils aus zwei sich schneidenden Scharen von zueinander parallelen Kanälen besteht. Dieser Federkörper ist nicht geeignet, größere Auflasten federnd aufzunehmen. Bei Auflasten, die einen bestimmten Grenzwert überschreiten, wird das den Block bildende Elastomer, insbesondere ein Schaumstoff, nicht mehr nur elastisch verformt, sondern knicken die Wände der großvolumigen Hohlräume quer zum Vektor der Auflast aus, was zu einem Setzen des Federkörpers ohne Rückstellkraft führt. Zur Lösung technischer Federungsaufgaben ist dieser bekannte Federkörper daher ungeeignet.

Aus der japanischen Offenlegungsschrif JP 52-37 675 A ist weiterhin ein hydraulischer Dämpfer bekannt, der insbesondere als Flächendämpfer ausgebildet ist und in dieser Form entweder als Prallwand oder als Fahrgleisträger dient. In diesen Flächendämpfern sind Hohlräume in Form stehender Zylinder ausgebildet, die im Fall der bandförmigen Dämpfer durch lineare Drosselkanäle miteinander verbunden sind, während sie im Fall der flächigen Dämpfer durch ein Drosselkanalnetz mit hexagonaler Struktur derart untereinander verbunden sind, daß jeder der Hohlräume von drei Kanälen durchsehzt ist. Durch eine solche netzartige Drosselkanalstruktur soll eine Richtungsunabhängigkeit der Dämpfungscharakteristik des Flächendämpfers erreicht werden. Der Dämpfer ist als Hydrodämpfer ausgebildet, das heißt, sämliche Kanäle und Hohlräume des Dämpfers sind mit einer Dämpfungsflüssigkeit gefüllt.

Die DE-C-723 596 zeigt einen Lagerkörper aus Gummi, der von zwei senkrecht zueinander verlaufenden, aber nicht schneidenden Scharen von Kanälen durchsetzt ist. Zur Abstimmung gegen Resonanz können die Kanäle durch Stöpsel beliebiger Nachgiebigkeit geschlossen werden.

Die im Matratzenfederkörper gemäß der deutschen Offenlegungsschrift DE-3 017 379 A1 ausgebildeten Kanalnetzstrukturen dienen ebenso wie die dich schneidenden und kreuzenden Kanalnetzstrukturen in dem starren Polystyrolschaumstoffkern gemäß der amerikanischen Patentschrift US-3 209 380 A der besseren Belüftung und Klimatisierung einer Matratzenstruktur in die die Kerne integriert sind.

Nachteilig an diesen bekannten, von Kanälen oder Kanalscharen, mit oder ohne intermittierenden Hohlräumen durchsetzten Gummifederkörpern ist weiterhin, daß sie, meist in Handarbeit, zeitaufwendig und produktionsaufwendig als Klebverbund-Schichtstrukturen aufgebaut sind. In der älteren, nicht vorveröffentlichten Anmeldung EP-0 187 888 A1 ist ein Federkörper beschrieben, bei dem der Elastomerblock mit Scharen von untereinander parallelen Kanälen durchsetzt ist, die sich räumlich überkreuzen, aber nicht schneiden, und von denen jeder seinerseits im Elastomerblock ausgebildete Hohlräume durchsetzt.

Angesichts dieses Standes der Technik liegt der Erfindung die Aufgabe zugrunde, einen mit Kanälen und Hohlräumen durchsetzten Federkörper aus einem elastischen Werkstoff zu schaffen, der einerseits mechanisch so widerstandsfähig, fest und stabil ist, daß er auch größere Lasten unbeschadet, insbesondere ohne Wandeinknickungen, bestimmungsgemäß abfedernd aufnehmen kann, andererseits aber eine ausgesprochen weiche Federcharakteristik aufweist, also einen ausgesprochen flachen Verlauf der Federkennlinie über einen weiten elastischen Rückstellbereich ohne ein Abfallen der Federkennlinie durch Knickeffekte, aufweist, und wesentlich einfacher, preiswerter und schneller herstellbar ist als die bekannten Federkörper.

Diese Aufgabe wird durch einen gemäß der Lehre des Anspruchs 1 geformten Federkörper gelöst.

Ein Merkmal des erfindungsgemäßen Federkörpers ist, daß der elastische Block, meist ein Gummiformkörper, der den eigentlichen Federkörper bildet, von Scharen sich kreuzender Kanäle durchsetzt ist, wobei sich diese Kanäle jedoch nicht schneiden, sondern sich im Raum in unterschiedlichen Ebenen kreuzen.

Außerdem schließt das Merkmal, daß sich die kreuzenden Kanäle nur räumlich überkreuzen, nicht aber schneiden, als notwendige Folgerung das Merkmal mit ein, daß jeder einzelne im Elastomerblock ausgebildete Hohlraum von nur einem einzigen Kanal durchsetzt ist. Diese Geometrie der Kanalverteilung und die Verteilung der von jeweils einem Kanal durchsetzten Hohlräume auf den Elastomerblock bewirken einerseits, daß der Federkörper trotz seines beachtlichen Porenvolumens mechanisch an keiner Stelle geschwächt ist und auch bei hoher Auflast, die vorzugsweise bestimmungsgemäß senkrecht zu den durch die Kanalscharen definierten Ebenen einwirkt, keinerlei Knickeffekte zeigt. Da andererseits die bei Auflast dem Federkörper aufgeprägte Verformungsspannung, die sich, bezogen auf die Gummimatrix, inhomogen auf die freien inneren und äußeren Oberflächen konzentriert, makroskopisch aber auf die gesamte Raumausdehnung des Federkörpers insgesamt bezogen, eine hochgradig homogene Verteilung aufweist, zeigt der Federkörper auch bei Wahl eines relativ festen und mechanisch stabilen Elastomers einen weiten und ausgesprochen weichen Verlauf des Proportionalitätsbereichs der Federkennlinie, der in Richtung hoher Lasten kontinuierlich in einen Progressionsbereich übergeht, ohne zwischendurch Abschnitte mit negativem oder zumindest negativ beeinflußtem Kennlinienverlauf, der auf Knickeffekte hinweist, aufzuweisen.

Der erfindungsgemäße Federkörper ist im wesentlichen dadurch gekennzeichnet, daß die Kanäle mindestens einer Schar von vorzugsweise untereinander jeweils in einer Ebene und parallel zueinander angeordneten Kanälen im Elastomerblock ausgebildete Hohlräume durchsetzen, deren größter lichter Querschnitt in der senkrecht zur Kanalachse liegenden Ebene größer als der Querschnitt der Kanäle in dieser Ebene ist, und senkrecht und parallel zur Kanalachse ein Achsenverhältnis im Bereich von 1 : 3 bis 3 : 1, insbesondere von zumindest ungefähr 1 : 1, aufweisen, und wobei die Kanäle die Hohlräume vorzugsweise so durchsetzen, daß die Mittelpunkte der Hohlräume auf der Achse der Kanäle liegen, und alle von einem Kanal durchsetzten Hohlräume, bezogen auf die Richtung der Kanalachse, gleichen Abstand voneinander aufweisen. Gleichzeitig weisen die Kanäle mindestens einer weiteren Schar von Kanälen über ihre gesamte Länge einen konstanten Querschnitt auf. Mit anderen Worten, mindestens eine Kanalschar dieser Ausgestaltung der Erfindung weist keine Hohlräume auf, deren freier Durchmesser größer als der lichte Durchmesser der Kanäle ist. Gegenüber früheren Arbeiten in dieser Richtung weist diese Ausgestaltung des Federkörpers den wesentlichen Vorteil der einfacheren Entformung bei Herstellung des Federkörpers im Spritzgießverfahren auf.

Außerdem zeigt der Federkörper gemäß der Erfindung eine überraschend gute akustische Dämpfung, die auf Streueffekte an den Kanalwänden und gegebenenfalls in den Hohlräumen an den Hohlraumwänden im Elastomerblock zurückzuführen ist. Zum anderen bleiben bei der Anordnung der Kanäle gemäß der Erfindung kaum noch nennenswerte Materialbrücken, die den Körperschall im Federkörper übertragen, durchgehend stehen.

Nach einer weiteren Ausgestaltung der Erfindung ist der Kanalquerschnitt der Kanäle der den Block durchsetzenden Kanalscharen vorzugsweise kreisförmig, oder aber auch elliptisch oder polygonal dergestalt ausgebildet, daß bei einem nicht rotationssymmetrischen Kanalquerschnitt die im unbelasteten Zustand des Federkörpers längste, gegebenenfalls auch längere Durchmesserachse des Kanalquerschnitts zumindest im wesentlichen parallel zum Vektor der bestimmungsgemäß abzufedernden Auflast steht. In diesem Fall ist der Kanalquerschnitt vorzugsweise elliptisch ausgebildet.

Wenn bei Federkörpern der vorstehend beschriebenen erfindungsgemäßen Art eine Verbesserung der Dämpfungscharakteristik erforderlich ist, kann dies dadurch erreicht werden, daß nach einer weiteren Ausgestaltung der Erfindung ein Teil der im Elastomerblock ausgebildeten Kanäle und/oder Kanäle mit Hohlräumen mit einem Dämpfungsmaterial, insbesondere einer Dämpfungsflüssigkeit mit variabler Viskosität, gefüllt sind, beispielsweise also einer viskoelastischen oder einer viskoplastischen Dämpfungsflüssigkeit.

Weitere Ausgestaltungen und Merkmale der Erfindung sind Gegenstand der Unteransprüche.

Die Erfindung ist im folgenden anhand von Ausführungsbeispielen in Verbindung mit der Zeichnung näher erläutert. Es zeigen:

Fig. 1     im Schnitt ein erstes Ausführungsbeispiel des Gummifederkörpers; und

Fig. 2     im Schnitt ein zweites Ausführungsbeispiel des Federkörpers.

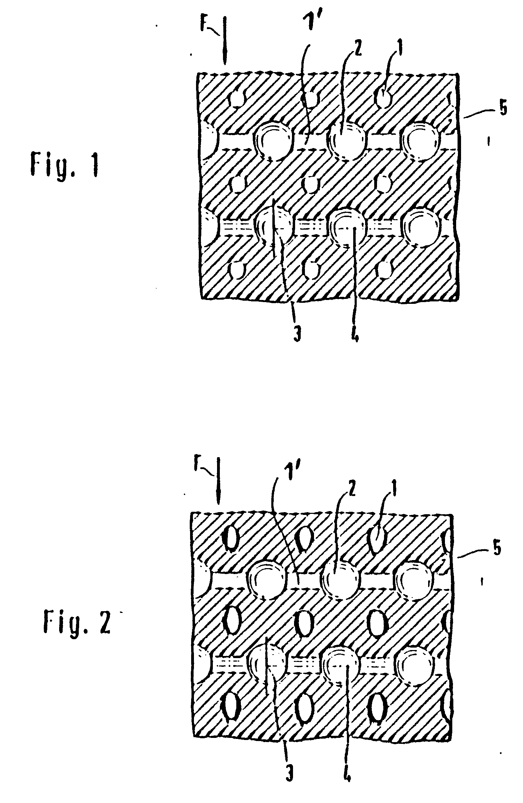

Ein erstes Ausführungsbeispiel des Federkörpers gemäß der Erfindung ist im Schnitt in Fig. 1 dargestellt. Ein Elastomerblock 5 ist von zwei Scharen zylindrischer Kanäle 1, 1' durchsetzt. Die Kanäle sind beidseitig offen und verlaufen in jeder der beiden Scharen parallel zueinander. Die Kanäle jeder einzelnen Schar sind in übereinanderliegenden Ebenen derart angeordnet, daß der Abstand jeweils zweier in einer Ebene benachbarter Kanäle gleich dem Abstand zum jeweils nächsten Kanal der angrenzenden Ebene von Kanälen ist. In dem in Fig. 1 gezeigten Ausführungsbeispiel und in dem dort dargestellten Schnitt bilden also die Querschnitte der Kanäle 1 ein kubisch primitives Gitter. Das gleiche gilt entsprechend für die Kanäle 1', die in der Darstellung der Fig. 1 im Axialschnitt gezeigt sind.

Die Kanäle 1 und 1' der beiden Kanalscharen überkreuzen einander rechtwinkelig, ohne sich jedoch zu schneiden. Mit anderen Horten, die einzelnen Ebenen der Kanäle 1 und 1' verlaufen ebenfalls parallel zueinander.

Weiterhin sind im Elastomerblock 5 kugelförmige Hohlräume 2 ausgebildet, die von den Kanälen 1' derart durchsetzt sind, daß die Mittelpunkte 3 der kugelförmigen Hohlräume 2 auf der Mittelachse 4 der Kanäle 1' liegen. Alle Hohlräume 2, die von den Kanälen 1' durchsetzt werden, weisen, bezogen auf die Mittelachse 4 der Kanäle 1', den gleichen Abstand voneinander auf, wobei dieser Abstand gleich dem Abstand der Kanäle 1' voneinander und ebenfalls gleich dem Abstand der Kanäle 1 voneinander ist. Dies bedeutet, daß die Hohlräume 2 im Elastomerblock 5 ein kubisch primitives Gitter bilden. Die Kanäle 1 sind glatt zylindrische Kanäle und durchsetzen keine Hohlräume.

Der in Fig. 1 dargestellte Federkörper dient insbesondere als Auflager, und zwar in einer solchen Ausrichtung, daß der Vektor der abzufedernden Auflast zumindest im wesentlichen senkrecht zu den durch die Scharen der Kanäle 1, 1' definierten Ebenen verläuft. Dies ist in der Fig. 1 durch den Pfeil F schematisch angedeutet. Bei einer solchen relativen Zuordnung der Lage der Kanäle 1, 1' und des Auflastvektors F treten im Federkörper keinerlei Knickeffekte ein, wie sie sonst sowohl bei elastischen Schaumstoffen als auch bei Federkörpern mit großvolumigen Hohlräumen als auch bei elastischen Federkörpern mit sich schneidenden Kanälen auftreten und zu einem signifikanten Verlust der Rückstellkraft führen.

Gegenüber einem aus gleichem Vollmaterial bestehenden Puffer weist der in Fig. 1 gezeigte Federkörper einen wesentlich weicheren und über einen weiteren Bereich lineare Federkennlinie auf, ohne dabei jedoch der mechanischen Festigkeit eines aus Vollmaterial gefertigten Gummipuffers nachzustehen, wobei auch im Vergleich zu Federkörpern, denen lediglich die Hohlräume 2 fehlen, eine deutlich verbesserte akustische Dämpfung auftritt. Die Verbesserung der akustischen Dämpfung ist auf akustische Streueffekte im Bereich der Hohlräume 2 zurückzuführen. Bei Herstellung des in Fig. 1 gezeigten Federkörpers (entsprechendes gilt im übrigen auch für den in Fig. 2 gezeigten Federkörper) wird der Elastomerblock 5 durch Formpressen oder Spritzgießen in einem Formnest erhalten, das von zwei Scharen wiederverwendbarer Formkerne durchsetzt ist, nämlich von zylindrischen Stäben, die die Kanäle 1 bilden, und von Perlstäben, die die Kanäle 1' mit den Hohlräumen 2 ausformen. Zum Entformen des Gummikörpers kann dann zunächst in einem ersten Schritt problemlos die Schar der die Kanäle 1 bildenden Formkerne gezogen werden, und wird dann in einem zweiten Schritt die Schar der die Kanäle 1' und die Hohlräume 2 bildenden Formkerne gezogen, wobei sich der von der ersten Formkernschar befreite Elastomerkörper 5 unbehindert aufweitend verformen kann, so daß die die Hohlräume 2 ausformenden Kugeln des Perlstabs ohne Komplikationen durch die jeweils zwischenliegenden Abschnitte der Kanäle 1' aus dem Elastomerblock 1 insgesamt herausgezogen werden können.

Bei Einwirkung einer Auflast auf den Federkörper gemäß der Fig. 1 verformen sich die Kanäle 1 und 1', wodurch der Federkörper seine typischen Kenndaten erhält. Diese Verformung unter Auflast erfolgt dabei in der Weise, daß die im unbelasteten Zustand des Federkörpers zylindrischen Kanäle elliptisch flachgedrückt werden. Bei großen Auflasten kann dies im Grenzfall dazu führen, daß die Kanäle vollständig zusammengedrückt werden, ihre Innenwände also aufeinanderliegen. Zum einen führt dies zu einer Verschlechterung der akustischen Dämpfungseigenschaften des Federkörpers und kann zum anderen dann zu Problemen führen, wenn ein Teil der Kanäle 1 oder 1' zu mechanischen Dämpfungszwecken mit einem Dämpfungsmaterial, vorzugsweise einem Dämpfungsfluid, gefüllt sind. Auflasten, bei denen ein solches vollständiges Zusammendrücken der Kanalquerschnitte eintritt, müssen daher in der Praxis als Grenzlasten für die Erzielung der Vorteile der Erfindung angesehen werden. Der Wert dieser Grenzlast bzw. Grenzbelastung kann jedoch durch geeignete Maßnahmen der geometrischen Formgebung ohne weiteres zu höheren Werten verschoben werden, was insbesondere dann von praktischer Bedeutung ist, wenn das Auflager unter Vorspannung eingesetzt werden soll. Ein Ausführungsbeispiel für einen solcherart höher belastbaren Federkörper ist schematisch in der Fig. 2 gezeigt. Bei dem in der Fig. 2 ebenso wie in Fig. 1 im unbelasteten Zustand dargestellten Federkörper weisen die Kanäle 1 nicht mehr einen kreisförmigen, sondern einen elliptischen oder ovalen Querschnitt auf, und zwar dargestalt, daß die längere Querschnittachse zumindest im wesentlichen parallel zum Vektor F der Auflast steht. Die Kanäle 1' können in gleicher Weise mit einem Querschnitt ausgebildet sein, der parallel zum Auflastvektor F größer als quer zu dieser Richtung ist. Es sei jedoch betont, daß die Querschnitte der Kanäle 1 und 1' der beiden im Elastomerblock ausgebildeten Kanalscharen nicht für beide Scharen gleich zu sein braucht. Vielmehr steht dem Fachmann hier ohne weiteres die Möglichkeit zur Verfügung, den Federkörper nach den Erfordernissen des beabsichtigten Einsatzbereichs den Anwendungserfordernissen anzupassen.

Im Gegensatz zu dem in Fig. 1 gezeigten Ausführungsbeispiel werden die Kanäle 1 und gegebenenfalls 1' bei dem in Fig. 2 gezeigten Federkörper zunächst im Querschnitt zumindest annähernd rundgedrückt, ehe bei einer weiteren Erhöhung der Belastung ein Flachdrücken der Kanäle wie auch bei dem in Fig. 1 gezeigten Federkörper erfolgt. Mit anderen Worten, der in Fig. 2 gezeigte Federkörper ist um die Auflast höher belastbar, die erforderlich ist, um die im unbelasteten Zustand ovalen Querschnitte rundzudrücken.

Wenn der Federkörper zusätzlich verstärkt Dämpfungseigenschaften aufweisen soll, werden ein Teil der Kanäle, keinesfalls jedoch alle Kanäle, mit einem Dämpfungsmaterial, insbesondere einem Dämpfungsfluid gefüllt. Ein Füllen sämtlicher Kanäle und/oder Hohlräume des Federkörpers mit Dämpfungsmateral verbietet sich, da der Federkörper sonst seine angestrebten weichen Federkenndaten einbüßen würde und sich nicht anders als jeder beliebige Hydrodämpfer verhalten würde.

Das Füllen der Kanäle und/oder Hohlräume mit dem Dämpfungsfluid kann in der Weise erfolgen, daß jeder Kanal einzeln gefüllt und dann hermetisch verschlossen wird, kann alternativ aber auch in der Weise erfolgen, daß der gesamte Federblock in ein Reservoir mit Dämpfungsflüssigkeit eingesetzt oder mit einem solchen verbunden wird, und zwar in der Weise, daß nur die zu füllenden Kanäle und/oder Hohlräume mit dem Dämpfungsfluidreservoir kommunizieren können. Dabei können die entsprechenden Anschlüsse sowohl als separate Teile ausgebildet als auch anvulkanisierte Gummiteile sein. Sollen beispielsweise, unter Bezug auf die Fig. 2, sämtliche Kanäle 1' mit den zugehörigen Hohlräumen 2 mit einer Dämpfungsflüssigkeit gefüllt werden, sind, mit Bezug auf die Darstellung der Fig. 2, die rechte und die linke Seitenwand des Elastomerblocks 5 kammerartig doppelwandig ausgebildet, wobei sich alle Kanäle 1' in die als Vorratskammer und Ausweichkammer dienende Seitenwandkammer einmünden.

Als Dämpfungsmaterial wird vorzugsweise ein Dämpfungsfluid verwendet, das eine variable oder einstellbare Viskosität aufweist, vor allem also eine viskoelastische oder viskoplastische Dämpfungsflüssigkeit.

Darüber hinaus kann das Dämpfungsverhalten des Federkörpers bei Verwendung einer Dämpfungsflüssigkeit selbstverständlich in an sich bekannter Weise auch durch eine Veränderung der Geometrie, genauer gesagt der Drosselkanalquerschnitte und der Hohlraumvolumen, einstellend beeinflusst werden. Dabei brauchen insbesondere die Hohlräume nicht nur eine einzige Konfiguration aufzuweisen, wie beispielsweise die in den Fig. 1 und 2 gezeigten ausschließlich kugelförmigen Hohlräume, sondern können auch untereinander unterschiedlich konfiguriert und/oder bemessen sein, wobei für die meisten Anwendungsfälle lediglich darauf zu achten ist, daß eine möglichst gute Gleichverteilung der einzelnen Hohlraumelemente über den Elastomerblock 5 vorliegt. Dabei ist in diesem Zusammenhang insbesondere zu gewährleisten, daß das erfindungswesentliche Merkmal gewährleistet ist, daß nämlich die Kanäle mindestens einer Schar der im Block ausgebildeten Kanäle 1' die Hohlräume 2 durchsetzen, während die Kanäle mindestens einer weiteren Schar von Kanälen 1 über ihre gesamte Länge einen konstanten Querschnitt aufweisen, wobei sich die einzelnen Kanäle vorzugsweise unter Ausbildung nur gleicher eingeschlossener Winkel auf räumlich verschiedenen Ebenen überkreuzen.

## Patentansprüche

1. Federkörper aus einem mit Kanälen durchsetzten Block aus einem elastischen Werkshoff, wobei der Block von mindestens zwei sich räumlich überkreuzenden, aber nicht schneidenden Scharen von Kanälen (1, 1') durchsetzt ist,
dadurch gekennzeichnet,
daß die Kanäle (1') mindestens einer Schar ihrerseits Hohlräume durchsetzen, deren größter lichter Querschnitt in der senkrecht zur Kanalachse liegenden Ebene größer als der Querschnitt der Kanäle in dieser Ebene ist, und senkrecht und parallel zur Kanalachse (4) ein Achsenverhältnis im Bereich von 1 : 3 bis 3 : 1, insbesondere von zumindest ungefähr 1 : 1, aufweisen, während die Kanäle mindestens einer weiteren Schar von Kanälen (1) über ihre gesamte Länge einen konstanten Querschnitt aufweisen und keine Hohlräume durchsetzen.

2. Federkörper nach Anspruch 1,
dadurch gekennzeichnet,
daß der Kanalquerschnitt kreisförmig oder elliptisch oder polygonal dergestalt ausgebildet ist, daß bei nicht rotationssymmetrischem Kanalquerschnitt die im unbelasteten Zustand des Federkörpers längste Durchmesserachse zumindest im wesentlichen parallel zum Vektor (F) der bestimmungsgemäß abzufedernden Auflast steht.

3. Federkörper nach einem der Ansprüche 1 oder 2,
dadurch gekennzeichnet,
daß alle von den sich überkreuzenden Kanalscharen (1, 1') in der Projektion auf die von den Kanalscharen definierten Ebene, die bestimmungsgemäß senkrecht zum Vektor (F) der abzufedernden Auflast liegt, eingeschlossenen Schnittwinkel gleich groß sind.

4. Federkörper nach einem der Ansprüche 1 bis 3,
dadurch gekennzeichnet,
daß der Block (5) von zwei sich räumlich in verschiedenen, zueinander äquidistanten Ebenen zumindest im wesentlichen rechtwinklig überkreuzenden, aber nicht schneidenden Scharen untereinander jeweils paralleler, räumlich gleichmäßig verteilter Kanäle (1,1') durchsetzt ist.

5. Federkörper nach einem der Ansprüche 1 bis 4,
dadurch gekennzeichnet,
daß die Kanäle (1') die Hohlräume (2) so durchsetzen, daß die Mittelpunkte (3) der Hohlräume auf der Achse (4) der Kanäle liegen, und alle von einem Kanal (1') durchsetzten Hohlräume (2), bezogen auf die Richtung der Kanalachse (4), gleichen Abstand voneinander aufweisen.

6. Federkörper nach einem der Ansprüche 1 bis 5,
dadurch gekennzeichnet,
daß im Block Kanäle (1, 1') und/oder Hohlräume (2) mit mindestens zwei voneinander verschiedenen geometrischen Konfigurationen und/oder Abmessungen ausgebildet sind.

7. Federkörper nach einem der Ansprüche 5 oder 6,
dadurch gekennzeichnet,
daß die Kanäle (1, 1') und/oder Hohlräume (2) insgesamt gleichmäßig über das Volumen des Blocks (5) verteilt sind.

8. Federkörper nach einem der Ansprüche 1 bis 7,
dadurch gekennzeichnet,
daß ein Teil, nicht alle, der im Elastomerblock (5) ausgebildeten Kanäle (1) und/oder Kanäle (1') mit Hohlräumen (2) mit einem Dämpfungsmaterial gefüllt sind.

9. Federkörper nach Anspruch 8,
dadurch gekennzeichnet,
daß das Dämpfungsmaterial eine Dämpfungsflüssigkeit mit variabler Viskosität ist.

## Claims

1. A spring element comprising a block of elastic material interspersed with channels, wherein the block is interspersed with at least two series of channels (1, 1') mutually crossing in space without intersecting each other,
characterized by
thab the channels (1') comprised by at least one series of channels intersect cavities, the largest free cross-section of said cavities in a plane normal to the channel axis being larger than the cross-section of the channels in the same plane, and said cavities further having a ratio of their diameters perpendicular to and parallel to the channel axis (4), respectively, in the range of 1 : 3 to 3 : 1; preferably of at least substantially about 1 : 1, while the channels of at least one further series of channels (1) have an invariable cross-section along their total length and do not intersect any cavities.

2. A spring element according to claim 1,
characterized by
that the cross-section of the channels is circular, elliptic or polygonal, whereat, in case the channels' cross-section is not rotationally symmetric, with respect to the unloaded and undeflected state of the spring element, the longest cross-sectional diameter of the channel cross-section is at least substantially parallel to the vector (F) of the load springally to be carried under normal operational condition.

3. A spring element according to one of the claims 1 or 2,
characterized by
that all angles have an equal value that are included in each case by the crossing channels or the crossing channels series (1, 1'), when represented in a projecting onto a plane as defined by the staple series of channels, which plane on normal operational conditions preferrably shall be oriented normal to vector (F) of the load to be carried springally.

4. A spring element according to one of the claims 1 to 3,
characterized by
that the block (5) is interspersed with two series of mutually parallel channels (1, 1') regularly distributed in space, which series of channels cross each other at at least substantially right angles in different planes equally spaced from each other in a direction normal to said planes.

5. A spring element according to one of the claims 1 to 4,
characterized by
that the channels (1') intersect the cavities (2) such that the centers (3) of the cavities are located on the central axis (4) of the channels, and that all cavities (2) intersected by one and the same channel (1') are equally spaced from each other with respect to the direction of the channel axis (4).

6. A spring element according to one of the claims 1 to 5,
characterized by
that the block is interspersed with channels (1, 1') and/or cavities (2) having at least two mutually different geometric configurations and/or dimensions, respectively.

7. A spring element according to one of the claims 5 or 6,
characterized by
that the channels (1, 1') and/or the cavities (2) in total are equally distributed in space over the total volume of the elastomer block (5).

8. A spring element according to one of the claims 1 to 7,
characterized by
that a certain number, not all, of the channels (1) and/or channels (1') intersecting cavities (2) formed in the elastomer block (5) are filled with a damping material.

9. A spring element according to claim 8,
characterized by
that the damping material is a damping liquid, especially a damping liquid having a variable viscosity.

## Revendications

1. Elément ressort constitué par un bloc de matériau élastique percé de canaux, cet élément étant traversé par deux groupes de canaux (1, 1') au moins qui se croisent dans l'espace mais sans se couper, caractérisé en ce que les canaux (1') de l'un des groupes au moins traversent des cavités dont la plus grande section libre dans le plan perpendiculaire à l'axe du canal est plus grande que la section des canaux dans ce plan et présentent, perpendiculairement et parallèlement à l'axe (4) du canal, un rapport d'axes qui varie de 1 : 3 à 3 : 1 et est notamment de 1 : 1 environ au moins tandis que les canaux (1) d'un autre groupe de canaux au moins présentent sur toute leur longueur une section constante et ne traversent pas de cavités.

2. Elément ressort selon la revendication 1, caractérisé en ce que la section des canaux a une forme circulaire, elliptique ou polygonale telle que, lorsque la section du canal n'est pas symétrique par rapport à un point, l'axe diamètral qui est le plus long lorsque le corps élastique n'est soumis à aucune charge est au moins sensiblement parallèle au vecteur (F) de la charge à absorber élastiquement.

3. Elément ressort selon l'une des revendications 1 ou 2, caractérisé en ce que les angles formés par les projections des groupes de canaux (1, 1') sur le plan défini par les groupes de canaux qui est perpendiculaire au vecteur (F) de la charge à absorber sont tous égaux.

4. Elément ressort selon l'une des revendications 1 à 3, caractérisé en ce que le bloc (5) est traversé par deux groupes de canaux (1, 1) qui sont parallèles les uns aux autres et répartis uniformément dans l'espace dans différents plans équidistants les uns des autres et se croisent dans des directions sensiblement perpendiculaires, mais ne se coupent pas.

5. Elément ressort selon l'une des revendications 1 à 4, caractérisé en ce que les canaux (1') traversent les cavités (2) de telle manière que les centres (3) des cavités se trouvent sur l'axe (4) des canaux correspondants et que toutes les cavités (2) traversées par un même canal (1') sont à la même distance les unes des autres dans la direction de l'axe (4) du canal.

6. Elément ressort selon l'une des revendications 1 à 5, caractérisé en ce que le bloc comporte des canaux (1, 1') et/ou des cavités (2) qui présentent au moins deux formes géométriques et/ou dimensions différentes.

7. Elément ressort selon l'une des revendications 5 ou 6, caractérisé en ce que les canaux (1, 1') et/ou les cavités (2) sont dans l'ensemble répartis uniformément dans tout le volume du bloc (5).

8. Elément ressort selon l'une des revendications 1 à 7, caractérisé en ce qu'une partie mais pas la totalité des canaux (1) et/ou des canaux (1') ménagés dans le bloc élastomère (5) et comportant des cavités (2), sont remplis par un matériau d'amortissement.

9. Elément ressort selon la revendication 8, caractérisé en ce que le matériau assurant l'amortissement est un liquide d'amortissement ayant une viscosité variable.

Fig. 1

Fig. 2